Europäisches Patentamt

European Patent Office

Office européen des brevets

(11) Publication number: **0 065 822**
A1

# (12) EUROPEAN PATENT APPLICATION

(21) Application number: **82302123.3**

(22) Date of filing: **26.04.82**

(51) Int. Cl.³: **G 02 B 1/00**
**G 02 B 5/08, H 01 S 3/08**

(30) Priority: **26.05.81 US 266766**

(43) Date of publication of application:
**01.12.82 Bulletin 82/48**

(84) Designated Contracting States:
**CH DE FR GB IT LI NL SE**

(71) Applicant: **Hughes Aircraft Company**
**Centinela Avenue and Teale Street**
**Culver City, California 90009(US)**

(72) Inventor: **Lawrence, Robert**
**31107 West Bailard Road**
**Malibu California 90265(US)**

(72) Inventor: **Edlin, Vernon H.**
**2637 Centinela Avenue**
**Santa Monica California 90405(US)**

(72) Inventor: **Leggett, Hyman**
**20324 Tulsa Street**
**Chatsworth California 91311(US)**

(72) Inventor: **Arandez, Marcia M.**
**23606 Naffa Avenue**
**Carson California 90745(US)**

(74) Representative: **Colgan, Stephen James et al,**
**CARPMAELS & RANSFORD 43 Bloomsbury Square**
**London WC1A 2RA.(GB)**

(54) Pressure-formed barium sulfate reflectors.

(57) Barium sulfate powder is molded under pressure into medium-hard, ceramic-like structural shapes. The material can be both molded and finished (e.g., machined, lapped, milled, etc.) to close tolerances. The pressure-formed barium sulfate retains the high reflectivity of the parent powder and is useful as reflectors for both a flash lamp (24) and a rod (26) in a laser resonator cavity (10). Advantageously, the pressure-formed barium sulfate evidences a thermal conductivity about fifteen times greater than that of the powder, which permits more rapid heat removal from the flash lamp (24) and laser rod (26). Further, the pressure-formed barium sulfate does not become friable during vibration and does not discolor at elevated temperatures.

Fig. 1.

PRESSURE-FORMED BARIUM SULFATE REFLECTORS

BACKGROUND OF THE INVENTION

1. Field of the Invention

This invention relates to barium sulfate reflectors, and, more particularly, to pressure-formed barium sulfate reflectors employed in lasers.

2. Description of the Prior Art

Barium sulfate powder is used in laser applications because of its extremely high reflectance across the visible and near-infrared spectrum. Heretofore, it has been used in laser resonator cavities either as a dry powder or in a liquid carrier which forms a thin, fragile coating. However, the powder becomes friable during vibration and the paint discolors at temperatures above about 200°F (93°C).

SUMMARY OF THE INVENTION

In accordance with the invention, pressure-formed barium sulfate is provided. The pressure-formed barium sulfate is advantageously employed in laser applications as reflectors, since it does not become friable during vibration and does not discolor at the elevated temperatures of use.

Barium sulfate powder is molded under any number of pressure-forming processes into medium-hard, ceramic-like structural shapes. The material can be both molded and finished to close tolerances. Mechanical, thermal, electrically-insulative and environmental characteristics are good. The high reflectance of the parent powder remains essentially unchanged. Examples of pressure forming processes desirably employed in the practice of the invention include hot pressing, dry pressing and tape processing.

## BRIEF DESCRIPTION OF THE DRAWING

FIG. 1 is a perspective view schematically depicting a laser resonator cavity with (simplified) barium sulfate parts;

FIG. 2 is an end view of the apparatus of FIG. 1; and

FIG. 3 is a cross-section through 3-3 of FIG. 1.

## DETAILED DESCRIPTION OF THE INVENTION

A number of processes are suitable for pressure-forming barium sulfate ($BaSO_4$). Three of these, hot pressing, dry pressing and tape processing, are discussed in detail below. Other techniques of applying pressure, such as isostatic pressing, may also be employed in the practice of the invention. Pressure-forming, as used herein, is meant to include any process generating a pressure in excess of ambient atmospheric pressure. The processing parameters themselves are known generally in the art of pressure-forming ceramic materials, though, apparently, not for $BaSO_4$. However, it will be appreciated that certain parameters, e.g., temperature, cannot be exceeded, in order to avoid chemical reactions, such as decomposition of barium sulfate, while other parameters, e.g., pressure, have a minimum value which is required to obtain dense compaction of barium sulfate. In this latter regard, a pressure of at least about 400 psi must be employed in order to obtain pressure-formed barium sulfate. Higher pressures than this, however, may be required for specific pressure-forming processes.

## 1. Hot Pressing

One method of obtaining densification is to apply an exterior pressure to a powder compact at elevated temperatures. This is a well-known process, and the parameters employed herein are within those considered in the art of those suitable for hot pressing ceramic materials. An example of a specific process is given below; however, it should be understood that particular times and temperatures, unless otherwise specified, are not critical and may be varied depending on parameters such as convenience, economics and the like.

Barium sulfate powder of a carefully selected particle size distribution and purity is measured out to meet part requirements. Mold release is applied to the mold to be employed in the hot pressing. The powder is loaded into the mold and compacted. The mold is then placed between the platens and plunger of a hydraulic ram. The mold is surrounded by a small furnace, mounted on the platens. The mold is heated, with a constant pressure applied to the barium sulfate. At a predetermined temperature, the pressure is increased and maintained for a sufficient time to compact the powder. The pressure is then released and the part is allowed to cool to room temperature. The part is ejected from the mold.

Barium sulfate is hot pressed at temperatures and pressures sufficient to retain a structural shape. Preferably, a mixture of barium sulfate powders of different particle size distributions is employed in order to maximize physical characteristics, such as handling strength and reflectivity, of the hot pressed object. Apparently, particle size distribution has an effect on physical characteristics. The powders are blended and homogenized by grinding. The mixed powder is poured into a graphite die, the cavity of which is lined with boron nitride (BN) which acts as a lubricant and parting agent, since barium sulfate has a tendency to stick to graphite. The shape of the die is that of the desired final form and is of substantially the same dimensions.

As is common, induction heating is employed. For such heating, a graphite die is advantageously used; however, any material capable of suscepting, such as metal, may alternatively be employed. Resistance heating could be employed in place of induction heating, which would permit the use of high conductivity materials, such as those listed above or beryllium oxide (BeO).

An initial pressure of about 400 to 500 psi is applied in order to compact the powder. The temperature is then raised from room temperature to an elevated temperature over a one hour period. While this temperature may be varied somewhat, it should not exceed about 1550°F (843°C), since otherwise discoloration of the barium sulfate occurs due to reaction with the die. A convenient temperature is about 1400°F (760°C).

The pressure is raised to about 1,000 psi and maintained at that pressure for about fifteen minutes. The time should not exceed about fifteen minutes at 1550°F, since otherwise discoloration is again obtained. Alternatively, pressure may be maintained at the initial pressure during the heating.

The pressure is released over a period of about one minute, and heat input to the die is terminated. The die is allowed to cool gradually, which may take from about six to eight hours.

The hot pressed barium sulfate part is then removed from the die and fired in air at about 1200°F (649°C) in order to remove surface carbon. This temperature is reached by heating from room temperature to the desired temperature over about a three hour period, held there for about one hour and allowed to cool naturally.

This combination of pressures and temperatures is chosen to obtain compaction of powder to the optimum densification.

The barium sulfate is then finished (e.g., machined, lapped, milled, etc.) to final dimensions. The reflectance of the finished part may be tested, as appropriate.

Example 1

Barium sulfate powders were mixed dry in a roller mill. In this case, J. T. Baker (Phillipsburg, NJ) and Eastman Kodak (Rochester, NY) $BaSO_4$ powders were combined in an 80:20 weight ratio: Depending upon the requirements of the final part, this ratio can vary from 100% of any supplier's product to any combination of $BaSO_4$ powders.

The faces of the male plungers and the interior surfaces of the female die (all graphite) were coated with a slurry of 100 mesh boron nitride powder and alcohol and then dried. A predetermined quantity of the barium sulfate was loaded into the female die with the bottom plunger in place. The top plunger was then inserted into the die. The die was heated to 1400°F (760°C) at a constant rate. With resistance heating elements, the total heating time was 2 hours. With induction heating, using the graphite die as the susceptor, the heating time was 38 minutes. A pressure of 400 psi was maintained to about 1000°F (538°C). The pressure was then increased to 1,000 psi and maintained until the die reached its maximum temperature. Peak pressure was maintained for 15 minutes. Pressure was then released and the die allowed to cool to about 750°F (399°C), at which time the die was removed from the furnace and allowed to cool to room temperature. The part was removed from the die and sintered in air to 1200°F (649°C) in 3 hours, held at maximum temperature for 2 hours and allowed to furnace cool. Less than 1% shrinkage was observed. The part was then finished to final dimensions.

The theoretical density value of $BaSO_4$ in the literature is 4.50 g/cm$^3$. However, pycnometer densities have shown consistent average true density values of 4.37 g/cm$^3$. The apparent density of the compacts was 3.92 g/cm$^3$.

The thermal expansion coefficient was as follows:

RT to 800°F (427°C)     10.5 x 10$^{-6}$/°F (18.9 x 10$^{-6}$/°C)
RT to 1000°F (538°C)    12.1 x 10$^{-6}$/°F (21.8 x 10$^{-6}$/°C)
RT to 1300°F (704°C)    13.8 x 10$^{-6}$/°F (24.8 x 10$^{-6}$/°C).

The thermal conductivity was found to be 0.704 Btu/ft-hr-°F (0.003 cal/cm-sec-°C) from room temperature to 200°F (93°C). The absolute reflectance at 0.7 µm (measured against Eastman Kodak #6091 White Reflectance Standard) was between 96 and 98%.

## 2. Dry Pressing

Dry pressing comprises the compacting of a dry, granulated ceramic powder under high pressure. The process which follows below is typical of dry pressing ceramic materials.

In this process, powdered barium sulfate is granulated by forming a cake which is heated at an elevated temperature and then ground and screened to a fine mesh. Following granulation, the barium sulfate is then mixed with one or more binders and pressed. The pressed barium sulfate is then fired to an elevated temperature to provide sintering and consolidation of the particles. To avoid warpage and distortion, this elevated temperature should not exceed about 1800°F (982°C) and the time at that temperature should not exceed about two hours. The barium sulfate is finished to final dimensions. The part may then be checked by a reflectance test. This process is similar to that used for dry pressing alumina ($Al_2O_3$).

Example 2

Reagent grade barium sulfate (J. T. Baker) was mixed with isopropyl alcohol to form a cake, which was dried and placed in an alumina ($Al_2O_3$) container. The cake was heated to 1750°F (954°C) over a 4 hour period, held at that temperature for 4 hours and allowed to cool naturally. The cake was ground in a ball mill for about 2 hours and screened to 200 mesh (74 µm).

The powdered barium sulfate was mixed with a lubricant (stearic acid), a binder (polyethylene glycol) and a solvent (iso-propyl alcohol), dried at 120°F (49°C) and granulated to 30 mesh. The powder was then placed in a metal mold and pressed at room temperature at about 10,000-12,000 psi. The molded part was then removed from the die, placed on alumina plates and fired to 1700°F (927°C) at a rate of about 200°F/hr (111°C/hr), held there for 3 hours and cooled naturally. Less than 1% shrinkage was observed. The part was then finished to final dimensions. The absolute reflectance at 0.7 µm (measured against Eastman Kodak #6091 White Reflectance Standard) was in excess of 99%.

3. Tape Forming

This process is similar to that used in making chip capacitors. A tape is formed on a glass substrate by casting thereon a slurry comprising barium sulfate powder and various organic binders, including plasticizers, solvents and the like. Additional tapes are deposited sequentially on top of each other to achieve the desired thickness.

The assembly is pressed at a moderate pressure of about 4,000 to 6,000 psi and at a slightly elevated temperature of about 130° to 150°F (55° to 65°C) for about four to six minutes to fuse the tapes.

Organic matter is burned off by slowly heating the assembly to an elevated temperature and soaking at that temperature for a period of time. Typically, the heating rate is about 20°F/hr (11°C/hr); the soaking temperature is at least about 800°F (427°C) to ensure complete burn-off. The soaking period is several hours, conveniently overnight.

Finally, the fused tapes are sintered at an elevated temperature for a period of time to consolidate the barium sulfate powder. The fused tapes are heated at a rate of about 100° to 120°F/hr (56° to 67°C/hr) to the sintering temperature. To avoid warpage and distortion, the sintering temperature should not exceed about 1800°F (982°C) for two hours.

The sintered barium sulfate tape is then finished to final dimensions and may be checked by a reflectance test.

<u>Example 3</u>

The following amounts of barium sulfate powder (J. T. Baker), binder, plasticizer and solvent were mixed together:

100 g BaSO₄

100 g Acryloid B-7 binder (available from Rohm and Haas, Philadelphia, PA)

5 g Santicizer S-160 plasticizer (available from Monsanto Chemical Company, St. Louis, MO)

35 g ethylene dichloride solvent.

The slurry was ball milled for 20 hours and then poured into a container associated with tape casting apparatus. A layer about 10 mils thick was cast onto a glass substrate, employing a doctor blade, as is conventional in tape casting processes. The tape was dried in air, removed from the substrate and cut to the desired size, here, 2.6 x 0.35 inch. Several, typically about 12, tapes were so cast and stacked in a die.

The stack was pressed with a heated platen at 150°F (65°C) at 4,000 psi for 4 minutes. The compact was removed from the die, placed in a circulating oven and raised to 800°F (427°C) at a rate of 20°F/hr (11°C/hr), held at that temperature for 12 hours to burn off organic matter and cooled naturally by turning off the oven power. The composite tape was then placed in a furnace, fired to 1750°F (954°C) at a rate of 100°F/hr, held at that temperature for 2 hours and cooled naturally by turning off the furnace power. Typically, about 18% shrinkage was realized employing this process. The resulting body was finished to final dimensions. The absolute reflectance at 0.7 μm (measured against Eastman Kodak #6091 White Reflectance Standard) was in excess of 99%.

4.    Properties of Pressure-Formed BaSO₄

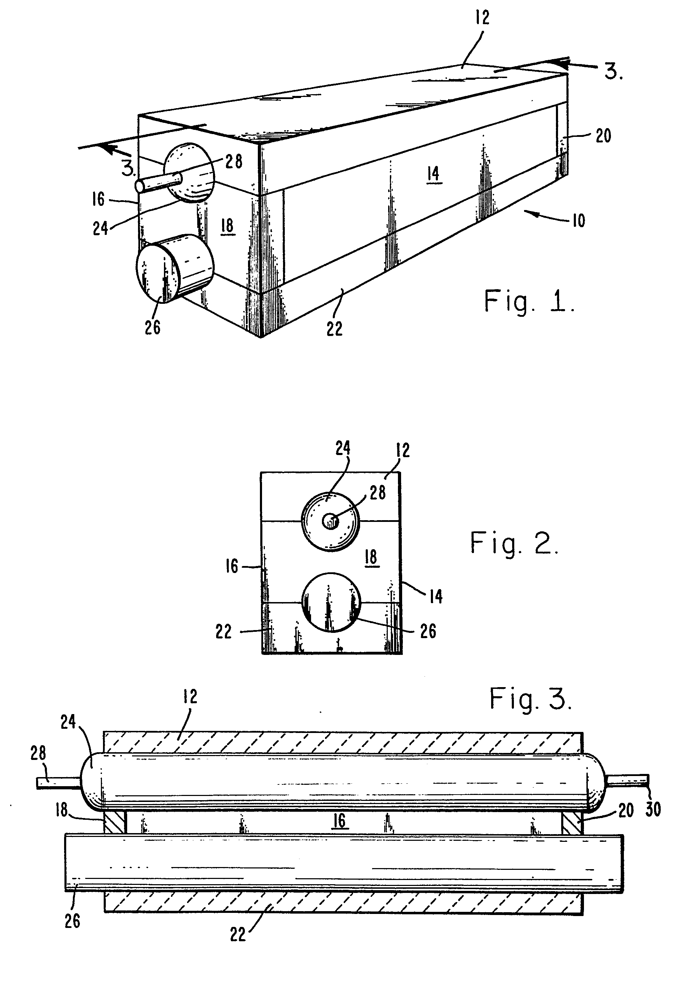

The pressure-formed barium sulfate of the invention can be both molded and finished to close tolerances. Mechanical, thermal, electrically-insulative and environmental characteristics are good. The high reflectance of the parent powder is essentially unchanged. This material is suitable as reflectors for both flash lamps and rods in laser resonator cavities. The pressure-formed barium sulfate provides a reflectance equal to or better than gold-or silver-plated metal without their disadvantages. Further, lower cost in production quantities than plated-metal or plated-plastic parts is realized. Advantageously, the entire cavity may be fabricated from pressure-formed barium sulfate parts, as shown in FIGS. 1-3, which are views of a laser resonator 10, comprising a top member 12, two side members 14, 16, two end members 18, 20 and a bottom member 22. The laser resonator supports a flash lamp 24 and a rod 26 capable of lasing under excitation from the flash lamp. Appropriate connections (not shown) are used to electrically activate the flash lamp via electrodes 28 and 30 and to optically manipulate the output from the laser. In accordance with the invention, the resonator members 12, 14, 16, 18, 20 and 22 are all fabricated from pressure-formed barium sulfate. As a consequence, interior surfaces of the resonator members evidence reflectivity comparable to that of surfaces comprising barium sulfate powder or barium sulfate coating.

The pressure-formed barium sulfate evidences a moderate electrical resistivity. The reflectors of the invention do not evidence the electrical arcing problem often experienced with gold- or silver-plated metal reflectors. Advantageously, the barium sulfate surface can accept vacuum deposited, screened-on or sputtered metallization.

The thermal conductivity is about fifteen times greater than that of the powder, which is advantegeous for removing heat from both the flash lamp and the laser rod. Further, the pressure-formed barium sulfate evidences a low coefficient of thermal expansion (between that of glass and steel). The barium sulfate formed by the process of the invention does not become friable during vibration, as does the barium sulfate powder, and does not discolor at 200°F (93°C), as does the barium sulfate coating.

DWC:blm

[D3-5]

## CLAIMS

What is Claimed is:

1. Pressure-formed barium sulfate reflectors.

2. The barium sulfate of Claim 1 formed to a pressure of at least about 400 psi.

3. Reflector for laser resonator cavities comprising pressure-formed barium sulfate.

4. The reflector of Claim 3 comprising barium sulfate formed to a pressure of at least about 400 psi.

5. A process for pressure-forming barium sulfate which comprises pressing barium sulfate powder at a pressure of at least about 400 psi.

6. The process of Claim 5 in which barium sulfate powder is hot pressed at a pressure sufficient to compact the powder and at a temperature less than about 1550°F for a period of time less than about fifteen minutes.

7. The process of Claim 5 in which barium sulfate granulated powder is dry pressed at room temperature at a pressure and for a time sufficient to compact the granulated powder and fired in air at a temperature less than about 1800°F for a period of time less than about two hours.

8. The process of Claim 5 in which barium sulfate powder is blended with organic binders, cast as one or more tapes sequentially on a substrate to form an assembly, pressed at an elevated temperature at a pressure and for a period of time sufficient to fuse the assembly, heated at an elevated temperature for a period of time sufficient to burn off the organic binders and sintered at an increased temperature of less than about 1800°F for a period of time less than about two hours.

9.   Product produced by the process of Claim 5.

10.   A process for fabricating reflector parts for laser resonator cavities which comprises pressing barium sulfate powder at a pressure of at least 400 psi.

11.   The process of Claim 10 in which barium sulfate powder is hot pressed at a pressure sufficient to compact the powder and at a temperature less than about 1550°F for a period of time less than about fifteen minutes.

12.   The process of Claim 10 in which barium sulfate granulated powder is dry pressed at room temperature at a pressure and for a time sufficient to compact the granulated powder and fired in air at a temperature less than about 1800°F for a period of time less than about two hours.

13.   The process of Claim 10 in which barium sulfate powder is blended with organic binders, cast as one or more tapes sequentially on a substrate to form an assembly, pressed at an elevated temperature at a pressure and for a period of time sufficient to fuse the assembly, heated at an elevated temperature for a period of time sufficient to burn off the organic binders and sintered at an increased temperature of less than about 1800°F for a period of time less than about two hours.

14.   Product produced by the process of Claim 10.

Fig. 1.

Fig. 2.

Fig. 3.

0065822

European Patent Office

**EUROPEAN SEARCH REPORT**

Application number

EP 82 30 2123.3

## DOCUMENTS CONSIDERED TO BE RELEVANT

| Category | Citation of document with indication, where appropriate, of relevant passages | Relevant to claim |
|---|---|---|
| A | US – A – 3 312 759 (E.C. LETTER) <br> * whole document * <br> -- . | 2,5 <br> 6,10, <br> 11 |
| A | US – A – 4 214 818 (W.J. CHOYKE et al.) <br> * column 3, lines 35 to 47 * <br> -- | 3,8, <br> 13 |
| A | US – A – 4 256 378 (K.M. PREWO et al.) <br> * column 1, line 57 to column 2, line <br> 16 * <br> ---- | 10,11 |

**CLASSIFICATION OF THE APPLICATION (Int. Cl. 3)**

G 02 B 1/00

G 02 B 5/08

H 01 S 3/08

**TECHNICAL FIELDS SEARCHED (Int.Cl. 3)**

C 04 B 35/00

C 04 B 39/00

G 02 B 1/00

G 02 B 5/00

H 01 S 3/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 21-07-1982 | BOTTERILL |

EPO Form 1503.1 06.78